# EUROPÄISCHE PATENTSCHRIFT

(11) **EP 1 546 652 B1**
(45) Veröffentlichungstag und Bekanntmachung des Hinweises auf die Patenterteilung: **10.01.2007**
(21) Anmeldenummer: 03757900.0
(22) Anmeldetag: 01.10.2003
(51) Int. Cl.: G01C 15/00, E01B 26/00, E01D 19/00

(54) **VORRICHTUNG UND VERFAHREN ZUR ÜBERWACHUNG DES UNTERBAUZUSTANDES VON FESTEN FAHRBAHNEN**
DEVICE AND METHOD FOR MONITORING THE STATE OF THE SUB-STRUCTURE OF FIXED TRACKS
DISPOSITIF ET PROCEDE DE CONTROLE DE L'ETAT DE L'INFRASTRUCTURE DE VOIES DE CIRCULATION FIXES

(30) Priorität: 04.10.2002 DE 10246312
(43) Veröffentlichungstag der Anmeldung: 29.06.2005
(73) Patentinhaber: RAIL.ONE GmbH, 92318 Neumarkt (DE)
(72) Erfinder: KLEEBERG, Jens, 90480 Nürnberg (DE)
(74) Vertreter: Blaumeier, Jörg
(86) Internationale Anmeldenummer: PCT/EP2003/010886
(87) Internationale Veröffentlichungsnummer: WO 2004/033992

(56) Entgegenhaltungen:
- EP-A- 0 962 747
- DE-A- 10 115 412
- PATENT ABSTRACTS OF JAPAN vol. 2000, no. 02, 29. Februar 2000 (2000-02-29) -& JP 11 325901 A (KEIHAN KOJI KK), 26. November 1999 (1999-11-26)

## Beschreibung

Die Erfindung bezieht sich auf eine Feste Fahrbahn mit einer auf Unterbauplatten liegenden Fahrbahnplatte.

Eine solche Feste Fahrbahn ist aus der DE-A-19620731 bekannt.

Zur Beurteilung der Beanspruchung des Systems Feste Fahrbahn und zur Feststellung eventueller Abweichungen der vorgegebenen Geometrien im Bereich massiver Unterbauten, beispielsweise von Brücken oder Auflagern, bedarf es einer permanenten Revision der Auflagerbedingungen Fester Fahrbahnen. Als kritische Stellen sind dabei insbesondere die Übergänge zwischen den als Unterbau der Festen Fahrbahn dienenden Tragplattenelementen anzusehen. Weitere Revisionsschwerpunkte sind Fahrbahnübergänge an Kunstbauwerken und Übergänge zu anderen Bauarten.

Aus dem Dokument JP-A-11325901 ist ein Messbolzen bekannt, der an einer bestimmten Messposition angebracht werden kann. Durch eine optische Messung kann die Höhe, der Abstand, die Richtung oder die Verschiebung des Messbolzens erfasst werden. Wenn diese Abweichungen einen bestimmten Wert überschreiten, kann ein Warnsignal ausgelöst werden.

Der Erfindung liegt die Aufgabe zugrunde, eine Feste Fahrbahn anzugeben, bei der gerade in kritischen Übergangsbereichen eine einfache Überwachung des Unterbauzustandes möglich ist, sodass beispielsweise ein Wegbrechen der Ränder der Unterbautragplatten rechtzeitig erkannt und notfalls repariert werden kann.

Zur Lösung dieser Aufgabe ist bei einer Festen Fahrbahn der eingangs genannten Art erfindungsgemäß vorgesehen, dass zur Überwachung des Unterbauzustandes der Festen Fahrbahn an den Enden der Unterbautragplatten Messbolzen befestigt sind, die die darüber liegende Fahrbahnplatte in vertikalen Ausnehmungen frei durchsetzen.

Die Messbolzen können dabei sowohl vor dem Aufbringen der Fahrbahnplatte in die Unterbautragplatte eingebracht worden sein oder aber auch nach Fertigstellung der Festen Fahrbahn durch nachträglich eingebrachte Bohrungen in die Unterbautragplatte eingebaut worden sein.

Daneben betrifft die Erfindung ein Verfahren zur Überwachung des Unterbauzustandes einer derartigen Festen Fahrbahn.

Zur Überwachung des Unterbauzustandes einer Festen Fahrbahn mit einer solchen Vorrichtung dienen erfindungsgemäß Revisionsfahrten mit Messfahrzeugen, die mit einer Laserabtastvorrichtung zur Bestimmung des Höhenversatzes der Messbolzen ausgerüstet sind.

Wenn von vorneherein sichergestellt ist, dass alle Messbolzen die Fahrbahnplatte um ein genau vorgegebenes Maß überragen, kann jede Abweichung der Höhe des Messbolzens gegenüber dieser Sollhöhe absolut als Kriterium für eine Veränderung des Zustands der Unterbautragplatte dienen. Da diese Möglichkeit in der Praxis aber kaum einhaltbar ist, wird man bei Revisionsfahrten jeweils einen Vergleich des Höhenversatzes jedes Messbolzens zu einer vorangegangenen Messung heranziehen und die Höhenveränderung Δh der Unterbautragplatte gegenüber der Festen Fahrbahnplatte für jeden Messbolzen gesondert erfassen.

Weitere Vorteile und Einzelheiten der Erfindung ergeben sich aus der nachfolgenden Beschreibung eines Ausführungsbeispiels sowie anhand der Zeichnung. Dabei zeigen:
- Fig. 1: einen schematischen Schnitt durch eine Feste Fahrbahn mit diskreten Unterbautragplatten, wie dies insbesondere im Übergangsbereich an Kunstbauwerken auftritt; und
- Fig. 2: einen vergrößerten Ausschnitt II im Bereich eines Messbolzens.

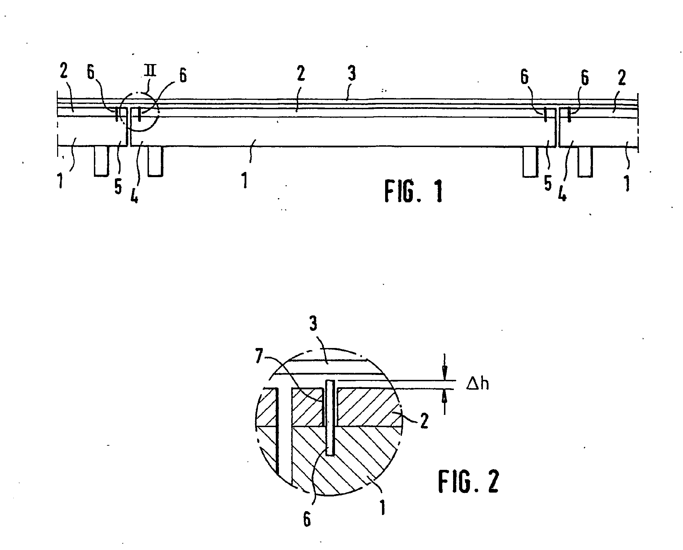

In Fig. 1 ist mit 1 jeweils eine Unterbautragplatte bezeichnet, auf der eine Feste Fahrbahnplatte 2 aufgebracht ist, die wiederum die durchlaufenden Schienen 3 trägt.

Um den kritischen Übergangsbereich zwischen zwei Unterbautragplatten 1, insbesondere im Bereich von Fahrbahnübergängen an Kunstbauwerken oder anderen Übergängen, möglichst einfach überwachen zu können, sind an den Enden 4, 5 der Unterbautragplatten 1 jeweils Messbolzen 6 befestigt, die ihrerseits die darüber angeordnete Fahrbahnplatte 2 in vertikalen Aussparungen 7 frei durchsetzen und vorzugsweise um ein kleines Maß über die Feste Fahrbahnplatte überstehen. Bei Revisionsfahrten lässt sich die Höhe der Spitze eines jeden Messbolzens 6 beispielsweise mithilfe eines Lasermesssystems eines Messfahrzeugs sehr einfach ermitteln, wobei bevorzugt über die Bestimmung der Höhenveränderung Δh gegenüber einer vorhergehenden Messung jede Höhenveränderung der Unterbautragplatte 1 sehr einfach ermittelt werden kann.

Der Messbolzen 6 kann sowohl vor dem Aufbringen der Fahrbahnplatte 2 als auch nach Fertigstellung der Festen Fahrbahn durch eine nachträglich eingebrachte Bohrung in die Unterbautragplatte 1 eingebaut werden.

## Patentansprüche

1. Feste Fahrbahn mit einer auf Unterbautragplatten (1) liegenden Fahrbahnplatte (2) ,die durchlaufende Schienen (3) trägt, **dadurch gekennzeichnet, dass** zur Überwachung des Unterbauzustandes der Festen Fahrbahn, insbesondere im Übergangsbereich der Unterbautragplatten (1), an den Enden (4, 5) der Unterbautragplatten (1) Messbolzen (6) befestigt sind, die die darüber liegende Fahrbahnplatte (2) in vertikalen Ausnehmungen (7) frei durchsetzen.

2. Feste Fahrbahn nach Anspruch 1, **dadurch gekennzeichnet, dass** die Messbolzen (6) die Fahrbahnplatte (2) um ein genau vorgegebenes Maß überragen.

3. Feste Fahrbahn nach Anspruch 1 oder 2, **dadurch gekennzeichnet, dass** die Messbolzen (6) vor dem Aufbringen der Fahrbahnplatte (2) in die Unterbautragplatte (1) eingebracht sind.

4. Feste Fahrbahn nach Anspruch 1 oder 2, **dadurch gekennzeichnet, dass** die Messbolzen (6) nach Fertigstellung der Festen Fahrbahn durch nachträglich eingebrachte Bohrungen in die Unterbautiagplatte (1) eingebaut sind.

5. Verfahren zur Überwachung des Unterbauzustandes einer Festen Fahrbahn nach einem der Ansprüche 1 bis 4, **dadurch gekennzeichnet, dass** durch Revisionsfahrten mit einem Messfahrzeug mit einer Höhendetektionsvorrichtung, insbesondere einer Laserabtastvorrichtung, der Höhenversatz der Messbolzen (6) bestimmt wird.

6. Verfahren nach Anspruch 5, **dadurch gekennzeichnet, dass** bei jeder Revisionsfahrt jeweils die Höhendifferenz Δh eines jeden Messbolzens (6) gegenüber einer vorhergehenden Messung ermittelt wird.

## Claims

1. Fixed carriageway having a carriageway panel (2) lying on substructure support panels (1), in particular in the transition region of the substructure support panels (1), **characterised in that** in order to monitor the substructure state of the fixed carriageway, which supports continuous rails (3), spindles (6) are fixed at the ends (4, 5) of the substructure support panel (1), which spindles freely penetrate the carriageway panel (2) above in vertical recesses (7).

2. Fixed carriageway according to claim 1, **characterised in that** the spindles (6) project over the carriageway panel (2) by a precisely specified distance.

3. Fixed carriageway according to claim 1 or 2, **characterised in that** the spindles (6) are inserted into the substructure support panel (1) before application of the carriageway panel (2).

4. Fixed carriageway according to claim 1 or 2, **characterised in that** the spindles (6) are inserted into the substructure support panel (1) through subsequently formed bores after completion of the fixed carriageway.

5. Method of monitoring the substructure state of a fixed carriageway according to one of claims 1 to 4, **characterised in that** by inspection trips with a measuring vehicle having a height-detection device, in particular a laser scanning device, the height offset of the spindles (6) is determined.

6. Method according to claim 5, **characterised in that** upon each inspection trip, respectively the height difference Δh of each spindle (6) is determined compared to a previous measurement.

## Revendications

1. Voie de roulement fixe comportant une dalle de voie de roulement (2) posée sur des dalles d'infrastructure (1), en particulier dans la zone de jonction des dalles d'infrastructure, **caractérisée en ce que** pour la surveillance de l'état de l'infrastructure de la voie de roulement fixe, qui supporte des rails (3) continus, des boulons de mesure (6) sont fixés aux extrémités (4, 5) des dalles d'infrastructure (1) et traversent librement la dalle de voie de roulement (2), posée sur ces dernières, dans des évidements (7) verticaux.

2. Voie de roulement fixe selon la revendication 1, **caractérisée en ce que** les boulons de mesure (6) s'avancent en saillie au-dessus de la dalle de voie de roulement (2) selon une valeur prédéfinie avec précision.

3. Voie de roulement fixe selon la revendication 1 ou 2, **caractérisée en ce que** les boulons de mesure (6) sont insérés dans la dalle d'infrastructure (1) avant la pose de la dalle de voie de roulement (2).

4. Voie de roulement fixe selon la revendication 1 ou 2, **caractérisée en ce que** les boulons de mesure (6) sont insérés dans la dalle d'infrastructure (1) après la réalisation de la voie de roulement fixe à travers des forures réalisées ultérieurement.

5. Procédé de surveillance de l'état de l'infrastructure d'une voie de roulement fixe selon l'une quelconque des revendications 1 à 4, **caractérisée en ce que** le décalage de hauteur des boulons de mesure (6) est déterminé par des trajets de contrôle avec un véhicule de mesure équipé d'un dispositif de détection de la hauteur, en particulier un dispositif de balayage par laser.

6. Procédé selon la revendication 5, **caractérisée en ce qu'**à chaque trajet de contrôle est déterminée respectivement la différence de hauteur Δh de chacun des boulons de mesure (6) par rapport à une mesure précédente.
